# EUROPEAN PATENT APPLICATION

(11) **EP 4 810 795 A1**
(43) Date of publication of application: **23.09.2026**
(21) Application number: 24891893.0
(22) Date of filing: 13.11.2024
(51) Int. Cl.: F03G 7/00

(54) **PROCESS FOR PULSE-BASED ELECTRICITY GENERATION TO POWER A SQUARE-PULSE ELECTRIC MOTOR BY COUPLING SAME TO A PERMANENT-MAGNET GENERATOR**

(30) Priority: 14.11.2023 MX 2023013543
(71) Applicant: Cortes Silva, Mario, Carmen, 24157 (MX)
(72) Inventor: Cortes Silva, Mario, Carmen, 24157 (MX)
(74) Representative: Marks & Clerk LLP
(86) International application number: PCT/MX2024/050083
(87) International publication number: WO 2025/105949

(57) **Abstract**

This invention relates to a process for generating electrical energy by pulses to power a square-pulse electric motor, coupling it to a permanent magnet generator; wherein the generation process consists of a water storage tank, an ionization chamber, a chamber with a magnetic rotor and water injection with copper ions, a dissociation chamber, a water compression chamber, a bellows, an array of piezoelectric generators, an electrical coupling, a square-pulse motor, and a magnetic generator coupled to the square-pulse motor.

## Description

### Field of Invention.

The present invention relates to the field of clean energy, and more specifically to electrical power generation.

The present invention defines a process for generating a pulsed electrical energy to power an electric motor coupled to a permanent magnet generator, thereby yielding usable electrical energy for supplying power to residential dwellings, office, and electrical or electronic equipment requiring electricity.

### Object of the invention.

The present invention defines a pulsed electrical energy generation process, powering an electric motor that is coupled to a permanent magnet generator, obtaining usable electrical energy to power homes, offices, and electrical and electronic equipment that require electricity.

### Background of the Invention.

Currently, electrical generation via renewable sources is constrained by dependence on external factors such as wind power, tidal power, and solar radiation. Conventional generation systems, using emergency plants, base their operation primarily on combustible fuels. Other systems, such as patent WO2010/053344A1 (portable self-sufficient electricity plant), disclose the use of batteries combined with a feedback system that alternatively recharges (self-supplies) the batteries to theoretically create an endless cycle. However, said disclosure fails to specify the operational capacities of the generator, nor does it account for entropy in accordance to the laws of thermodynamics. Consequently, the system of patent WO20101053344A1 exhibits an operational lifespan limited to a nominal number of cycles until de batteries reach a depletion threshold where output power is insufficient to drive the motor, causing system failure. The operational runtime depends entirely on battery capacity and construction, the power demanded by the motor, and the power capacity supplied by the generator.

In contrast to patent WO2010/053344A1, our pulsed electrical energy generation process for energizing a square-wave electric motor coupled to a permanent magnet generator is based on 10 several universal principles and laws.

Other documents illustrating the state of the art are listed below:
- MX/a/2022/016084: Method, apparatus, device, and system for electrical generation.
- MX/a/2022/000375: Electrical energy and hydrogen generation system.
- MX 236769 B: Method and device for convection energy generation.
- MX 381996 B: Electrolyte formation process.
- MX 253720 B: Ferritic stainless steel featuring high creep resistance at high temperatures.

Within the international state of the art, more than 500 documents 20 related to pulsed electrical generation have been published; nevertheless, none of said disclosures mention the use of a chamber equipped with a magnetic rotor and copper-ion water injection, or a dissociation chamber combined with a water compression chamber.

Since no patent documents were located relating to pulsed electrical generation for square-wave motors utilizing 25 a chamber with a magnetic rotor and copper-ion water injection, or a dissociation chamber and a water compression chamber, no point of comparison can be established between the state-of-the-art documents and the subject matter disclosed herein.

### Conclusions:

Because the state of the art does not describe or disclose pulsed electrical generation processes for square-wave motors utilizing a chamber with a magnetic rotor and copper-ion water injection, or a dissociation chamber and a water compression chamber, the invention satisfies the requirements of novelty and 5 inventive steps.

Below, the relevant laws and principles are substantiated:
1. Faraday's Law of Electromagnetic Induction: This law establishes that a change in magnetic flux through a circuit induces an electromotive force (emf).
2. Maxwell's Laws: Maxwell's equations describe the fundamental laws 10 of electromagnetism, including Gauss's law for electric fields, Gauss's law for magnetic fields, Faraday's law, and Ampere's law.
3. Principle of Conservation of Energy: Also known as the First Law of Thermodynamics, it establishes that energy can neither be created nor destroyed, only transformed from one form to another. In the electrical generation process, it is demonstrated 15 that the mechanical energy of the water and the repulsive and compressive motions are converted into electrical energy via Faraday's law.
4. Kirchhoff's Theorem: Kirchhoff's theorem, specifically Kirchhoff's Voltage Law (KVL), is used for circuit analysis and the summation of voltages around closed loops.
5. Principle of Kinetic Molecular Theory: Cited within the water compression and decompression system, wherein pressure elevation and ionization are exploited to facilitate the cleavage of hydrogen bonds. This principle explains the behavior and movement of molecules in a gaseous state.
6. Principle of Conservation of Angular Momentum: This principle applies to the use 25 of magnets and repulsion to maintain continuous motion; the conservation of angular momentum ensures that the system maintains its rotational motion in the absence of external forces.
7. Principle of Conservation of Momentum: This principle applies to the magnet and coil system, where the conservation of momentum ensures that the repulsive and attractive forces are properly balanced to maintain continuous motion.

The presented document includes an electrical generation process based on a specifically invented procedure, featuring components and concepts 5 related to electrical engineering and physics, wherein some of the components used are commercially available off-the-shelf items obtainable from specialized retailers. However, the technical result achieved through the integration thereof is entirely novel and non-obvious (possesses an inventive step).

None of the cited electrical generation documents mention a 10 chamber with a magnetic rotor and copper-ion water injection, a dissociation chamber, or a water compression chamber.

### Subject Matter of the Invention

The subject matter under evaluation is a pulsed electrical generation process for square-wave motors and the integration of equipment as a system 15 utilizing a chamber with a magnetic rotor and copper-ion water injection, a dissociation chamber, and a water compression chamber.

### Brief Description of the Drawings

Figure 1 represents the basic flow of the process.
Figure 2 represents the block diagram of the process.
Figure 3 represents the interconnection diagram of the magnetic generator (1), showing the following components: 220/2200V transformer (2); magnetic contactor (3); donut-type ferrite magnets (4); 75 VAC capacitor (5); transformer output (6); brushless motor (7); 3.6 V Li-ion battery (8); PVC cross fitting (9); battery management system (BMS) (10).
Figure 4 represents the storage and initial ionization process, showing the following components: plastic water storage reservoir (11); ¼" aluminum tube (12); surrounding copper coil (13); excitation system for the coil (load) (14).
Figure 5 represents the diagram of the containment chamber, showing the following components: ¼" aluminum tube (12); pivot (15); compression chamber 34 composed of ferrite, copper, and gadolinium; rubber stopper (17); shaft (18); ¾" tube (19) composed of ferrite, copper, and neodymium; 5V stepper motor (26); power supply 5 (20) (load); bellows (21), preferably constructed from leather, wood, and iron.
Figure 6 represents the electrical pulse generation phase, showing the following components: bellows (21); bridge or clamp (22); piezoelectric generator array (23); transformer connection (24); transformer output (25) (load); 0.5 HP square-wave electric motor (26).
Figure 7 shows the complete schematic diagram of the pulsed electrical energy generation process; a comprehensive description of the process showing the following components:
   12V magnetic generator (1); brushless motor (7); BMS circuit (27); water storage reservoir (11); ionization chamber (16) internally containing a high-purity copper and silver surrounding coil (13); high-frequency PWM circuit (28); outlet with an aluminum connection tube (29); 5-volt stepper motor mini water pump (30); ¼" aluminum tubing (12) for fluid conduction; magnetic rotor (39); resonant circuit (40); high-frequency transducer (41) (ultrasound); surrounding coil (13) around the aluminum 20 tube (12); plunger with a movable neodymium base (43); mini pneumatic cylinder (44); far-spectrum infrared LED light (45); tubular structure (46) with a cavity and walls coated with magnetic materials; compression chamber (47); perfusion bag (48); pneumatic micro-press (49); 20V piezoelectric generators (50); 8-input to 1-output coupling transformer (51); 125 VAC capacitor (52); 25 power distribution panel (53); 0.5 HP pulse motor (54); 10:1 gear reducer (55); low-RPM 4 kw/h self-induced electrical generator (neodymium) (56).

### Detailed description of the invention

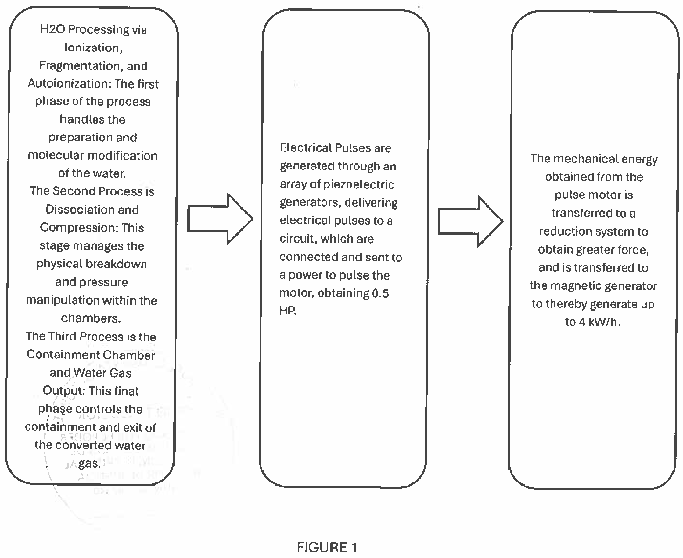

The present invention is directed to pulsed electrical generation, which is harnessed by a square pulse motor to thus obtain mechanical energy to couple an alternator (Figure 1). The process is as follows: subprocess of through ionization, fragmentation, and autoionization;
a dissociation and compression sub-process; and a sub-process within the containment chamber and the water-gas outlet.

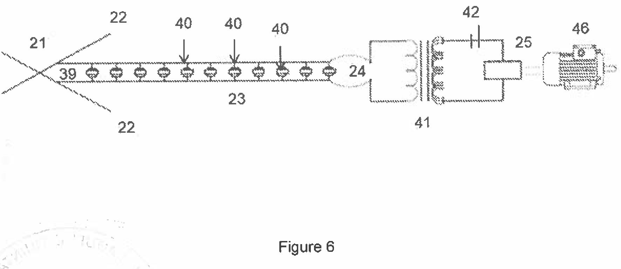

Electrical pulses are generated via an array of piezoelectric generators 24 (Figure 6), delivering electrical pulses to a circuit where they are collected and routed 5 to energize the pulsed electric motor 52 (Figure 6), yielding an output of 0.5 HP.

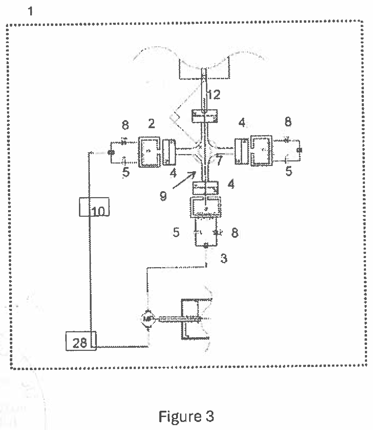

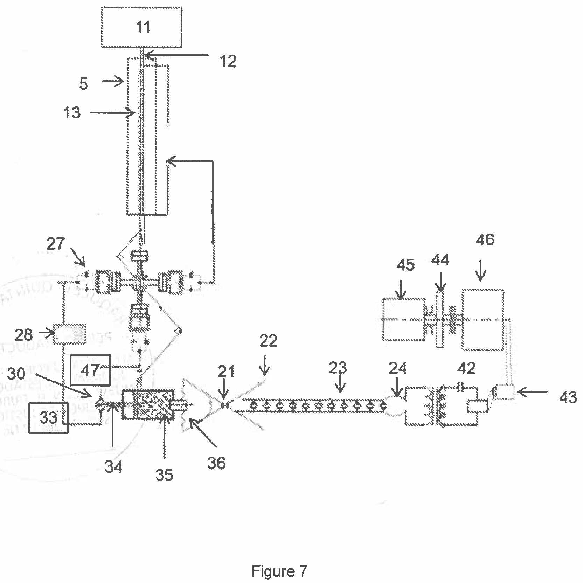

The mechanical energy obtained from the pulsed electric motor 52 (Figure 7) is transferred to a reduction gear system 53 to achieve higher torque, and is then transferred to the magnetic generator 28, thereby generating up to 4 kW/h. With reference to Figure 3, a magnetic generator is implemented.

The modifications performed on the present transformer (2) are as follows:
A battery management system (BMS) (10) for controlling the charging and discharging profiles of the battery (8), thereby maximizing the efficiency of the battery shown in Figure 8 and extending its continuous operational runtime up to 80 hours; and a brushless motor (24) serving as a support mechanism to the first, similar brushless motor (7), implemented for the purpose of minimizing the friction coefficient 15 and optimizing rotational efficiency.

The operation of the magnetic generator of Figure 3 is straightforward, with the components assembled as follows:
The four donut-type ferrite magnets (4) are adapted onto the cross fitting (9) and secured using bolts, nuts, and washers. Then, the cross fitting (9) is fixed to the first brushless 20 motor (7), which in turn is coupled to the second brushless motor (24) to optimize motion efficiency and minimize friction, and the assembly is secured to a base. A transformer (2) is positioned adjacent thereto at a distance of 4-5 cm. Interconnected within the primary winding of the transformer (2) is the magnetic contactor (3), which is also installed at a distance of 1 cm from the rotational radius of the ferrite magnets (4). Its primary function is 25 to open and close the power supply circuit between the 3.6V battery (8) and the primary winding of the transformer (2). This generates a magnetic field utilized for the repulsion of the ferrite magnets (4) to maintain a constant rotation of the magnet array. The secondary winding is used to obtain a potential difference once it is excited by the magnetic field upon the passage of the ferrite 30 magnets (4) (Faraday's Law). To maintain a stable voltage output, a 75 VAC capacitor (5) is adapted thereto, thereby yielding direct current to power the remaining sub-systems and recharge the 3.6V batteries (8) connected to the magnetic generator (1).

This magnetic generator (1) was selected given the additional use of its components within the fluid treatment process. Importantly, the generation capacity of said device is 12 volts.

Having described the power supply source of the system, we now proceed to the sub-components of the electrical generation process.

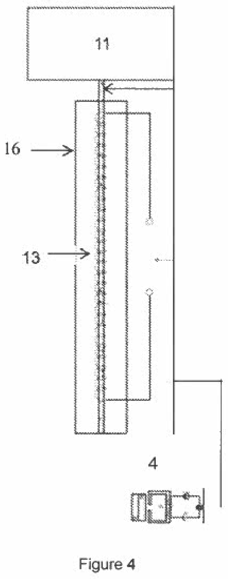

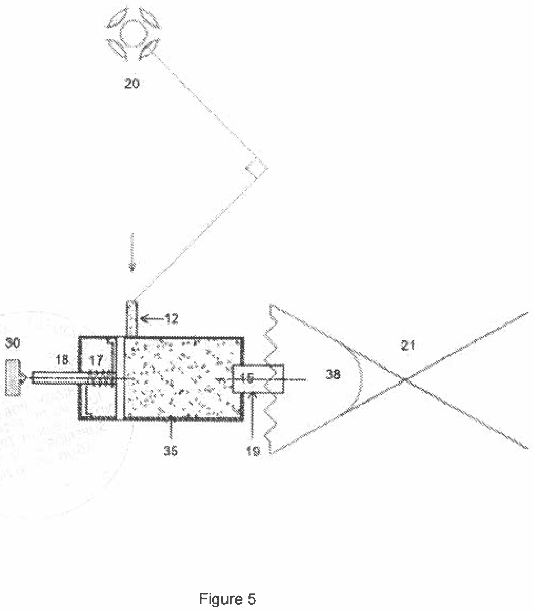

The device comprises 4 core elements:
1. H2O processor (Figure 4).
2. A chamber equipped with a magnetic rotor and copper-ionized injection, an ionization chamber (17), and a compression chamber (47) (Figure 5).
3. A compression and decompression system driven by molecular density (Figure 5).
4. A piezoelectric system and square-wave pulsed electric motor (Figure 6).

### Governed Physical Principles:

Principle of Conservation of Angular Momentum: The principle of conservation of angular momentum applies to the utilization of the magnets and coils to maintain constant generator motion. The conservation of angular momentum ensures that the system maintains its rotational motion in the absence of external forces.

Newton's laws of motion are fundamental to analyzing the movement and interaction of forces within the system. The repulsive and attractive forces between the magnets, as well as the motion of the water molecules, are governed by Newton's laws. Newton's laws include the law of inertia, the law of force, and the third law of action and reaction, which describes how objects move and respond to forces.

### 1. H20 Processor.

Continuing with Figure 3, the device operates on the principle of the magneticdipole moment of H2O. It consists of a surrounding coil (13) constructed with copper wire of 98% purity and silver. This coil operates at low voltage 24 volts and low amperage ≤ 0.498 A. Water low in salts is made to flow through, yielding magnetized copper and ionized water. The ionization process enriches the H2O before it enters the compression chamber (47).

The physical principles interacting in the present process are as follows:
Ionization: When a water molecule (H2O) is bombarded by charged particles (ions), or by photons of sufficient energy, it loses one of its electrons, forming a positively charged species: the H2O+ ion. This is the process known as ionization. Although the concept of ionization in most cases refers to chemical interaction, the process describes how magnetic fields can affect the properties and behavior of low-salinity water.

### Effects of Magnetic Fields on Water:

Magnetic fields can influence the properties of water, particularly the orientation of water molecules due to their magnetic dipole mbment. Water is a molecule with a permanent dipole moment, meaning it has a partial positive charge on the hydrogen and a partial negative charge on the oxygen, giving it a dipole structure.

### Magnetic Interaction Energy Equation:

To describe how magnetic fields affect water molecules, the magnetic interaction energy equation can be used:$E = - μ \cdot B$ Where:
E is the magnetic interaction energy.
µ is the magnetic dipole moment of the water molecule.
B is the magnetic field intensity.

This equation shows that the magnetic interaction energy depends on the magnetic dipole moment of the molecule and the intensity of the magnetic field.

Change in the Orientation of Water Molecules:
When a magnetic field is applied to a water system, the water molecules tend to align in the direction of the field due to the magnetic interaction. This is known as the paramagnetic orientation of water. However, it is important to note that this effect is relatively weak compared to other effects such as electrical interaction.

In summary, magnetic fields can affect the orientation of water molecules due to their magnetic dipole moment.

Maxwell's equations are fundamental to understanding how electric and magnetic fields interact and are generated in the described process. These laws describe how electromagnetic fields propagate and affect electrically charged particles.

2. Chamber with Magnetic Rotor and H2O Injection (H2O ionization chamber (17) and compression chamber (47).

The system is integrated with two chambers: the first, also called the dissociation chamber (17), features a magnetic rotor and the injection of copper-ionized H2O; the second is the compression chamber (47).

The dissociation chamber (17) has two main functions:
First Function: It changes the spin angle during a time interval. This process of paramagnetic orientation of H2O is sent to the magnetic generator (1) composed of ferrite magnets (4). These are round magnets in the shape of a perforated cylinder, placed in pairs on a spider bracket (9) to reduce the friction coefficient. They are mounted on a dual brushless system so that the sum of the friction coefficient values is approximately zero (0).

The repulsion movement over a dual-fusion coil system generates voltage and feeds the repulsive magnetic field (repelling the magnet) to continue the movement.

Continuing with Figure 3, the magnetic generator (1) is constructed with high-hardness steel sheets containing high chromium and magnesia content. Over it sits a wire winding made of copper wire of 98% purity, 240 turns, and a wire diameter of 1 mm. Connected to one pair of the winding is a 3.6 V battery with a Battery Management System (BMS) (10) for the excitation of the coil (13) and the creation of an internal magnetic field.

This generator produces 12 volts in pulses, which is sent to a 0.12 millifarad capacitor (5). With this, a summation of the two coils is performed by applying Kirchhoff's theorem to increase the amperage to more than one Ampere while maintaining the voltage, thereby powering the system for a duration of 80 hours. ${\sum }_{0}^{81} \left(cf1+Cf2\right) + \int cfn dem + \left[{\int }_{0}^{80} \left(Cet+Fem pJc+deem\right)\right] = 0$

The second function is the temperature increase in the aluminum center of the brushless motor (7). As water passes through, leveraging the magnetic field flux to shift the electron's orbit, the molecule enters a state of resonance, making it possible to charge the molecule. This facilitates the breaking of the covalent bond through an increase in pressure within its atmosphere inside the cylinder. In the arrangement mounted on the aluminum shaft where the ionized water circulates, the ferrite magnets (4) enter into a perpendicular magnetic movement (centrifugal movement) or repulsion. When the movement equalizes for more than 80 hours, the coefficient is 0.

With reference to Figure 5, the compression chamber (35) consists of a piston with a movable neodymium base (34) and features a coil arrangement on its exterior. Upon injecting a potential difference, these coils generate a magnetic field of the same polarity, creating a repulsion against the movable neodymium base (34). This repulsion produces compression with sufficient force to induce the breaking of the hydrogen bonds.

The physical principles involved in the process are Maxwell's equations, which are fundamental to understanding how electric and magnetic fields interact and are generated in the described process, especially in the operation of the magnetic generator.

Maxwell's equations are a set of four partial differential equations that describe how electric and magnetic fields are generated, how they propagate, and how they affect one another. Maxwell's equations are fundamental to understanding how electric and magnetic fields interact and are generated in the described process. These laws describe how electromagnetic fields propagate and affect electrically charged particles.

This generator produces 12 volts in pulses, which is sent to a 0.12 millifarad capacitor (5).

Principle of the Molecular Kinetic Theory: The principle of the molecular kinetic theory is relevant to understanding the behavior and movement of water molecules during the compression and decompression processes. Pressure and electromagnetic charge are utilized to modify covalent bonds and achieve a change of state in the molecules.

In molecular kinetic theory, molecules in a liquid are considered to move in a chaotic pattern due to their collisions and impacts with other nearby molecules. To describe this movement and the interactions of a water molecule in a liquid state, we can use the **Langevin equation,** which is a simplified form of the equation of motion for a particle subjected to random forces.

### 3. Compression and Decompression System by H2O Molecular Density (Figure 5).

The molecules are injected into a piston with a movable neodymium base (34), which is constructed from a magnetic material that prevents the molecules from adhering to the walls.

The atmospheric pressure is lowered (vacuum pressure) sufficiently to break the covalent bonds-breaking the hydrogen bond via pressure (Kinetic Molecular Theory) and electromagnetic charge.

Molecules in this state are conducted through a duct composed of magnetic materials with a dual function: to push the ionized particles forward and to prevent them from adhering to the duct walls. This is achieved thanks to the water molecules and the Cu (copper) ions.

### Intervening Physical Principles

This equation (from Kinetic Molecular Theory) relates the pressure, volume, and temperature of an ideal gas or vapor. When the pressure and temperature increase and reach certain critical values, water in a liquid state transitions into a gaseous or vapor state. The equation allows for predicting how changes in pressure and temperature will - To integrate the molecular kinetic theory with Newton's three laws and describe the motion and interactions of a water molecule in a liquid state-as well as its change of state to a gas under the influence of atmospheric pressure, temperature, and particle velocity-a macroscopic approach is utilized. By considering the collective behavior of a large number of molecules, we can relate macroscopic variables to Newton's laws and the microscopic properties of the molecules.

### Motion and Interactions of a Water Molecule in a Liquid State

We use the Langevin equation to describe the motion of a water molecule in the liquid, as previously mentioned. Furthermore, we consider that the water molecule is subjected to gravitational forces, which depend on its mass and the acceleration due to gravity. Finally, we utilize Newton's third law, which states that for every force exerted by the molecule in the liquid, there is a reaction force equal in magnitude but opposite in direction.

### Change of State of Water from Liquid to Gas or Vapor under Atmospheric Pressure, Temperature, and Particle Velocity

Ideal Gas Law: Describes the change of state of water from liquid to gas or vapor under the influence of atmospheric pressure, temperature, and particle velocity. We use the Ideal Gas Law to describe the change of state of water to gas or vapor under atmospheric pressure, temperature, and particle velocity.

Forces in Gaseous State: Additionally, we consider the forces acting upon the molecule when it is in the gaseous state. In this case, it will also be subject to the gravitational force and the reaction force resulting from its collisions with other molecules in the gas.

### 4. Square-Pulse Electric Motor (Figure 7)

A light is applied via a far-spectrum LED (36) to keep the water unstable (it changes state under pressure), and these electrons are conducted to accumulation chambers called perfusion bags (*bolsas perfusoras*) (38). Upon reaching their limit, these bags contract abruptly due to the restoration of the hydrogen bonds a torque is generated during this contraction movement, which drives a motion array of commercial-grade piezoelectric generators (23) (with values of 20 Volts, 8 mA per unit). From there, power is supplied to the square-pulse motor shown in figure (26).

To address this final phase of the process, we must first consider the change of state of the water from gas to liquid under the variation of pressure and temperature. Then, we will obtain the time required for the gas or vapor molecules to return to a liquid state, as well as the pressure or suction force exerted by said change of state. For our case, we have that the specific volume of the vapor is approximately equal to the specific volume of the water in a liquid state, since the difference in volume during a small change in pressure and temperature is negligible.

The resulting pressure or suction force exerted by this change of state will depend on the contact surface area of the water inside the **perfusion bag** (38) and the change in internal pressure when the pressure shifts to one atmosphere.

Clausius-Clapeyron Relation: This law establishes the relationship between pressure, temperature, and the latent heat of vaporization during the change of state from a liquid to a gas.

Boyle's Law: This law states that, at a constant temperature, the pressure and volume of a gas are inversely proportional.

Charles's Law: This law states that, at a constant pressure, the volume of a gas is directly proportional to its absolute temperature.

First Law of Thermodynamics: Also known as the Law of Conservation of Energy, it states that energy can neither be created nor destroyed, only transformed from one form to another.

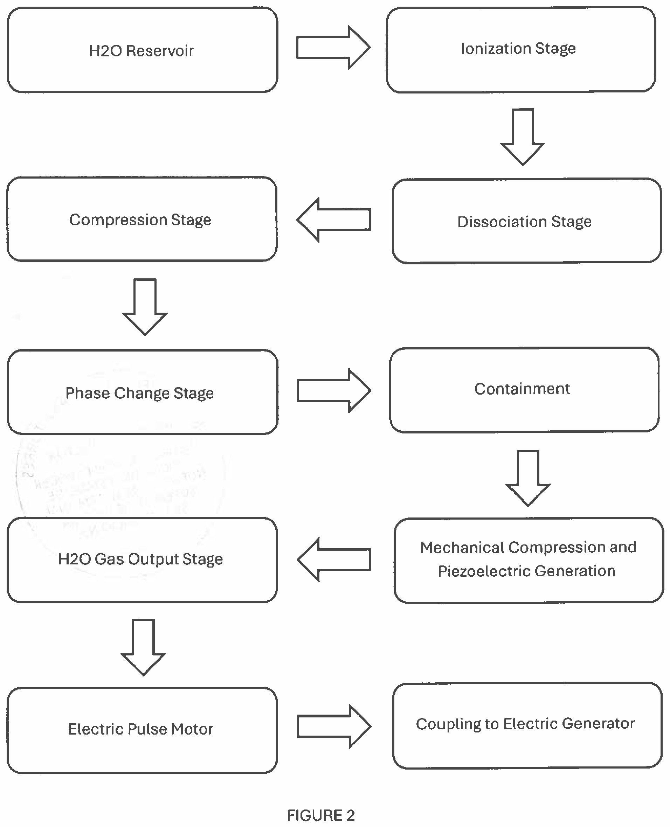

Mathematical Equation for the Time Required for Gas or Vapor Molecules to Return to Liquid State:
We can utilize the Clausius-Clapeyron Relation to relate the pressure, temperature, and latent heat of vaporization (L) during the change of state. Figure 2 describes the block diagram of the overall Process.

### Bellows and Piezoelectric Generators

The particles within the internal contents of the bellows (21) decrease their kinetic energy, resulting in a decrease in internal pressure. This pressure drop is reflected as a decrease in temperature in the ideal gas equation. When the temperature decreases, the internal pressure drops, causing the walls of the bellows (21) to contract.

Additionally, the laws of thermal expansion also play an important role. When vapor enters the bellows, the walls of the bellows (21) expand due to heat absorption. When transitioning to atmospheric pressure, the molecules quickly return to their liquid state and, in doing so, contract, causing a contraction of the bellows (21).

The relationship between the change in length (Δ 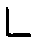 ), the initial length ( 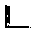 0), the coefficient of linear expansion (α), and the temperature change (ΔT) is described by the following equation: $ΔL = αL 0 ΔT$

When the bellows (21) fills with gas (vapor) as shown in Figure 5, the particles contained inside the bellows gain kinetic energy. This results in an increase in particle velocity and, therefore, an increase in the internal pressure of the bellows. This pressure increase can be described using the Ideal Gas Law, which states:$PV = nRT$ Where:
P is the pressure in the bellows.
V is the volume of the bellows.
n is the amount of substance (number of moles) of the gas in the bellows.
R is the gas constant (approximately 8.314 J/(mol·K) for air).
T is the temperature in Kelvin.

In summary, the expansion and contraction of the internal walls of the bellows are due to the variation in internal pressure caused by changes in the molecular structure, along with the thermal expansion of the materials inside the bellows. These phenomena are explained and substantiated using the ideal gas laws and thermal expansion.

### Magnetic Generator

### Faraday's Law of Electromagnetic Induction

Justification: Faraday's law is fundamental to explaining how electrical energy is generated in the "Magnetic" generator shown in Figure 4. The variation of the magnetic flux in the primary winding of the transformer due to the movement of the magnets generates a potential difference in the secondary winding, which produces an electrical current.

Equation: Faraday's law can be expressed as: E = -N * dΦ/dt Where E is the induce electromotive force, N is the number of turns in the coil and dΦ/dt is the rate of change of the magnetic flux through the coil.

### Kirchoff's Law

Justification: Kirchhoff's theorem is important in the electrical circuit to guarantee that the current entering the generator is equal to the current leaving, ensuring the conservation of electrical charge within the system.

Equation: Kirchhoff's Current Law is expressed as: Σ I_in = Σ I_out, where Σ I_in is the sum of the currents entering the node. And Σ I_out is the sum of the currents leaving the node.

### Energy Conservation Principle

Justification: The principle of conservation of energy is essential to ensure that the mechanical energy obtained from the movement of the water molecules and the magnets is preserved and converted into electrical energy.

The energy conservation principle can be expressed as: Initial Mechanical Energy + Generated Electrical Energy = Final Mechanical Energy.

### H2O Processor

### Renner-Teller Effect

The electrons in a molecule are distributed into levels with different energies. If an electron is stripped from the highest energy level of the water molecule, the resulting H2O+ ion formed is stable. Conversely, if a somewhat higher energy is imparted, an electron is extracted from a deeper level. In this case, the resulting ion breaks apart, producing fragments that include radicals such as OH, hydrogen atoms, and their positive ions. This rupture was observed over thirty years ago, but until now, the mechanism of how it occurs has not been explained. In general, the movements of electrons and nuclei in a molecule can be considered independent, given that the nuclei are thousands of times heavier than the electrons and therefore move much more slowly. However, the H2O+ ion fragments via a mechanism that requires coupling between the movements of the nuclei and the electrons.

### Reorganization, Opening, Closing, and Separation

The fragmentation process initially involves a rapid reorganization of electrons that takes place in a very short time through a conical intersection. As a consequence of this reorganization, the H-O-H equilibrium angle becomes 180°, placing the three nuclei along a straight line, and an opening and closing movement of this angle (called bending) is observed around the linear geometry. Simultaneously, the oxygen and hydrogen nuclei separate. The percentages of fragments obtained from numerical simulation match the experimental data: 70% of the H2O+ ions dissociate into OH+ + H, while 22% fragment into H+ + OH. The proportions of OH+ + H and OH are determined by the interaction between the movements of the electrons and the bending movement of the nuclei, which is known as the Renner-Teller effect.

### The Autoionization Constant (Kw)

### The autoionization constant is expressed as follows: Kw = [H3O+] [OH-]

Equilibrium expressions do not include the concentrations of pure solids and pure liquids. Therefore, when expressing Kw, the concentration of water-a pure liquid-is not included.

We calculate the value of Kw at 25 °C by using [H3O+], which is related to the pH of the water. At 25 °C, the pH of pure water is 7. Therefore, we can calculate the concentration of hydronium ions in pure water:
[H3O+]=10-Ph=10-7M at 25 °C

We observe that hydronium and hydroxide are formed in a 1:1 molar ratio during the autoionization of pure water. We can use this relationship to calculate the hydroxide concentration in pure water at 25 °C:
[OH-]=[H3O+]=10-7 M at 25 °C

Process: We utilize a small far-spectrum LED (45), a coil, and a copper compression chamber (47) through which the liquid will flow, following the short procedure shown in Figure 5.

Equation: Faraday's law can be expressed as: E = -N * dΦ/dt Where E is the induced electromotive force, N is the number of turns in the coil, and dΦ/dt is the rate of change of magnetic flux through the coil (Figure 5).

Chamber with a magnetic rotor and H2O injection with copper (Cu) ions, or H2O ionization chamber (17) and compression chamber (47), Figure 5.

The kinetic molecular theory is used to explain the behavior of water molecules in the H2O molecular density compression and decompression system.

Equations: The kinetic molecular theory is based on mathematical models that describe the motion and interactions of particles in a gas or liquid, including equations for pressure, particle velocity, and temperature.

### Principles of Kinetic Molecular Theory:

This theory is used to explain the behavior of water molecules within the H2O molecular density compression and decompression system. This equation specifically serves to explain the behavior inside the chamber with the magnetic rotor.

The kinetic molecular theory is based on mathematical models that describe the motion and interactions of particles in a gas or liquid, including equations for pressure, particle velocity, and temperature.

### Mathematical Model of the Motion and Interactions of a Water Molecule in a Liquid State

In kinetic molecular theory, molecules in a liquid are considered to move in a chaotic pattern due to their collisions and impacts with other nearby molecules. To describe this motion and the interactions of a water molecule in a liquid state, we can use the Langevin equation, which is a simplified form of the equation of motion for a particle subjected to random forces: $mdtdv = - yv + Fr$ Where:
- m is the mass of the water molecule.
- V is the instantaneous velocity of the water molecule.
- y is the friction coefficient, representing the interaction of the molecule with other molecules in the liquid and the surrounding medium.
- Fr is a random force symbolizing the combined effects of collisions and impacts with other molecules.

This equation describes how the velocity of the molecule changes over time due to friction with other molecules and the random forces it experiences. The velocity of the molecule changes constantly because of these collisions and impacts, resulting in the chaotic motion characteristic of the liquid state.

### Mathematical Model of the Change of State of Water from Liquid to Gas or Vapor under Atmospheric Pressure, Temperature, and Particle Velocity

To describe the change of state of water from a liquid to a gas or vapor under the influence of atmospheric pressure, temperature, and particle velocity, we can utilize the equation of state for ideal gases, known as the Ideal Gas Law:
Ideal Gas Law: PV=nRT Where: I
- P is the pressure of the gas or vapor (in Pascals, Pa).
- V is the volume occupied by the gas or vapor (in cubic meters, m³)
- n is the amount of substance of the gas or vapor, measured in moles (mol).
- R is the ideal gas constant, approximately 8.312 J/(mol · K).
- T is the temperature of the gas or vapor (in Kelvin, K).

This equation relates to the pressure, volume, and temperature of an ideal gas or vapor. When the pressure and temperature increase and reach certain critical values, water in a liquid state transitions into a gaseous or vapor state. The equation allows for predicting how changes in pressure and temperature will affect the change of state of the water, and how the velocity of the water particles relates to the variables.

To integrate the molecular kinetic theory with Newton's three laws and describe the motion and iterations of a water molecule in a liquid state-as well as its change of state to a gas under the influence of atmospheric pressure, temperature, and particle velocity-we can utilize a macroscopic approach and consider the collective behavior of a large number of molecules.

In this manner, we can relate macroscopic variables to Newton's laws and the microscopic properties of the molecules. Below is a general description of the mathematical model that integrates these concepts:
Motion and Iterations of a Water Molecule in a Liquid State
We use the Langevin equation to describe the motion of a water molecule in the liquid, as previously mentioned: mdtdv=-yv+Fr
Additionally, we consider that the water molecule is subjected to gravitational forces, Fg, which depend on its mass, and the acceleration due to gravity, g. Therefore, we can include this force in the equation: $mdtdv = - yv + F + Fg$

Finally, we utilize Newton's third law, which states that for every force exerted by the molecule in the liquid, there is a reaction force equal in magnitude, but in opposite direction.

Thus, we can express the reaction force, Freaction, in terms of the net force acting on the molecule: Freaction: n-(-yv+Fr+Fg).

Change of State of Water from Liquid to Gas or Vapor under Atmospheric Pressure, Temperature, and Particle Velocity
We use the Ideal Gas Law to describe the change of state of water to a gas or vapor under atmospheric pressure, temperature, and particle velocity: $PV = nRT$

Additionally, we consider the forces acting upon the molecule when it is in the gaseous state. In this case, it will also be subject to the gravitational force and the reaction force resulting from its collisions with other molecules in the gas, Fcollision. By combining these forces, we can establish an equation that describes the motion and the change of state of the molecule in the gas: $Mdtdv = - yv + Freaction + Fg + Fcollision$

Maxwell's Equations: The physical principles involved in the process include Maxwell's equations, a set of four partial differential equations describing how electric and magnetic fields are generated and propagate. These equations are as follows:
a) Gauss's Law for Electric Fields: ∇ · E = p / ε0
b) Gauss's Law for Magnetic Fields: ∇· B = 0
c) Faraday's Law of Induction: ∇ x E = ∂Bt/∂t
c) Ampere-Maxwell Law: ∇ Xb = µ0 (J + ε0∂E/∂t)

Coulomb's Law for Magnetism: This law governs the force of attraction or repulsion between two magnetic poles, which is utilized in the alloy of the chamber walls shown in Figure 5.

The force (repulsive or attractive) between two magnetic poles (within a medium) is directly proportional to the product of the strengths of the magnetic poles and inversely proportional to the square of the distance between them. Given the foregoing, this is applied for containment within the chamber.

Directly proportional to the pole strength (F ∝ m 1 meters 2).

Inversely proportional to the square of the distance "r" between the poles.

Inversely proportional to the absolute permeability [µ] of the surrounding communication channels.

F ∝ m 1 meters 2 and F OCl/r2F = K (m1m2) / µr2

### Lorentz Force

A charged particle located inside a magnetic field within the chamber experiences a magnetic force (Lorentz force) normal to its trajectory. This force causes changes in the direction of its velocity vector, though not in its magnitude, causing its kinetic energy to remain constant. Unlike in electric fields, a charged particle at rest inside a magnetic field does not experience any force. A very different case occurs when the particle is in motion; in this scenario, the particle will indeed experience a magnetic force known as the Lorentz force. Therefore, magnetic fields are generated by moving charges and only exert a force on electrical charges that are in motion.

The Lorentz law establishes that a charged particle moving at a velocity through a point where a magnetic field intensity exists will experience a force called the Lorentz force. The magnitude of this force is proportional to the value of q, and is obtained via the following expression:

### Zero Force (Nula)

If the particle has no charge: q = 0 -> F. If the particle is at rest: v = 0 -> F = 0.

If the velocity of the particle is parallel to the field: F + |q|·v·B·sen 0 -> F=0 Maximum Force.

If v and B are perpendicular (α = 90°) then: F = |q| ·v·B·sin 90 = |q| ·v·B.

### Work and Acceleration in the Lorentz Force

Inside the chamber, the trajectory of a charged particle is situated within a magnetic field. By definition, the velocity vector of any particle is always tangent to the trajectory it describes. Additionally, we know that the Lorentz force is always perpendicular to v; therefore, regardless of whether the magnetic field is uniform or not, the Lorentz force is always normal to the trajectory.

From this reasoning, we can deduce that if only the Lorentz force is acting:
The particle has no tangential acceleration, only normal acceleration. This implies that the magnitude of the velocity vector does not change (the speed or rapidity of the particle is unaltered), but its direction can change.

Since the force is perpendicular to the displacement occurring along the trajectory, the work done by the Lorentz force is zero. Therefore, within magnetic fields, the kinetic energy of a particle remains constant.

### Square-Pulse Electric Motor (26)

To explain this final phase of the process, we must first consider the change of state of the water from gas to liquid under the variation of pressure and temperature. Then, we will obtain the time required for the gas or vapor molecules to return to a liquid state, as well as the pressure or suction force exerted by said change of state.

Mathematical Equation for the Time Required for Gas or Vapor Molecules to Return to a Liquid State:
We can utilize the Clausius-Clapeyron Relation to relate the pressure, temperature, and latent heat of vaporization (L) during the change of state. The equation is as follows: $dTdP + T \left(Vv-Vl\right) L$

Where: Dp is the change in pressure, Dt is the change in temperature, L is the latent heat of vaporization, T is the absolute temperature (in Kelvin), Vv is the specific volume of the vapor, VI is the specific volume of the liquid.

For our case, we have that the specific volume of the vapor (Vv) is approximately equal to the specific volume of the water in a liquid state (VI) since the difference in volume during a small change in pressure and temperature is negligible. To calculate the resulting pressure or suction force exerted by this change of state, we use the following equation: $F = A ⋅ ΔP$ where: F is the Force, A is the contact surface area, ΔP is the change in the internal pressure of the container.

The resulting force will depend on the contact surface area of the water inside the container and the change in internal pressure when the pressure shifts to one atmosphere.

The particles within the internal contents of the bellows decrease their kinetic energy, resulting in a decrease in internal pressure. This pressure drop is reflected as a decrease in temperature in the ideal gas equation. When the temperature decreases, the internal pressure drops, causing the walls of the canister to contract.

Additionally, the laws of thermal expansion also play an important role. When vapor enters the bellows (23), the walls of the bellows expand due to heat absorption. When transitioning to atmospheric pressure, the molecules quickly return to their liquid state and, in doing so, contract, causing a contraction of the bellows (23).

The relationship between the change in length (ΔL), the initial length (L0), the coefficient of linear expansion (α), and the temperature change (ΔT) is described by the following equation: $ΔL = αL 0 ΔT$

When the bellows fill with gas (vapor) as shown in Figure 6(1), the particles contained inside the bellows gain kinetic energy. This results in an increase in particle velocity and, therefore, an increase in the internal pressure of the bellows. This pressure increase can be described using the Ideal Gas Law, which states: $PV = nRT$

Where:
P is the pressure in the bellows.
V is the volume of the bellows.
n is the amount of substance (number of moles) of the gas in the bellows.
R is the gas constant (approximately 8.314 J/(mol·K) for air).
T is the temperature in Kelvin.

Once the aforementioned process has been described, we proceed to harvest the resulting mechanical energy due to the contraction of the bellows (21). A piezoelectric generator (40) is positioned with a capacity of 20 volts per pulse from each piezoelectric array (23). The obtained voltage will be channeled to an electrical array composed of a capacitor (42) and a transformer (41), which are interconnected to the square-pulse electric motor (26).

Regarding the square-pulse electric motor (26), the motor will be coupled via a 3:1 reduction system (44) to a 4 Kw self-induced electric generator (45), generating electrical energy with a maximum capacity of 3.8 Kw. The difference is due to the power factor inherent to the generator and the connection distances to the load.

The parts comprising the process for Generating Electrical Energy by Pulses, used to power a square-pulse electric motor coupled to a permanent magnet generator, are listed below.

The indicated numbers refer to Figure 3:
(1) Magnetic generator
(2) 220/2200V Transformer
(3) Magnetic contact
(4) "Donut" type Ferrite Magnets
(5) 75 VAC Capacitor
(6) Transformer output
(7) First brushless motor
(8) 3.6 V Li-ion battery
(9) PVC spider bracket
(10) Battery Management System (BMS)
(11) Plastic water storage tank
(12) ¼" Aluminum tube
(13) Surrounding copper coil
(14) Excitation system for the coil (load)
(15) Pivot or valve
(16) Ionization chamber
(17) Rubber stopper
(18) Arm or shaft
(19) ¾" Tube composed of Ferrite, Copper, and Neodymium
(20) Ionized water feed (load)
(21) Leather, wood, and iron bellows
(22) Bridge with arms
(23) Piezoelectric Generator Array
(24) Connection to the Transformer
(25) Transformer output (load)
(26) Square-Pulse Electric Motor
(27) BCM circuit
(28) High-frequency PWM circuit
(29) Output with ¼" aluminum connecting tube
(30) 5-volt stepper motor
(31) Liquid conduction piping made of aluminum
(32) Magnetic rotor
(33) Resonant circuit
(34) Piston with movable neodymium base
(35) Compression chamber
(36) Far-spectrum LED light (infrared). Provides stability, extending the ionization time of the water.
(37) Contraction chamber
(38) Perfusion bag internal to the bellows
(39) Micro pneumatic press
(40) 20V Piezoelectric generators
(41) 8-input to 1-output coupling transformer
(42) 125 VAC Capacitor
(43) Power distribution board (or power supply panel)
(44) 10:1 Reducer (or reduction gear)
(45) Low-RPM Self-Induced Electric Generator (Neodymium), 4 kW/h
(46) Square-pulse electric motor
(47) High-frequency transducer (ultrasound). Maintains the ionization energy of the water.

## Claims

1. A process for generating electrical energy by pulses, comprising the steps of:
a. Water ionization;
b. Dissociation;
c. Compression;
d. Liquid-to-gas phase change;
e. Abrupt decompression to generate mechanical energy;
f. Coupling of the mechanical energy to a square-pulse electric motor;
g. Transformation of the mechanical energy of the motor through a coupling to a self-induced generator;
Wherein the initial energy is obtained from the compression-expansion of water to power a square-pulse electric motor, coupling it to a permanent magnet generator, **characterized in that** it utilizes a chamber with a magnetic rotor and water injection with copper ions, a dissociation chamber, and a water compression chamber.

2. A system for generating electrical energy by pulses to power a square-pulse electric motor, consisting of a water tank that feeds an ionization chamber, a permanent magnet generator through which the ionized water absorbs thermal energy, a compression chamber that receives the ionized water passing through the permanent magnet generator and features a piston driven by a motor that draws energy from the permanent magnet generator and creates vacuum pressure in a chamber wherein the water changes from a liquid phase to vapor, [and] a bellows driven by the passage of the water vapor that, at its opposite end, moves a pair of arms that press against a piezoelectric generator, which sends electrical energy to a transformer, and this in turn, to a self-induced electric generator.

3. The system for generating electrical energy by pulses to power a square-pulse electric motor, coupling it to a permanent magnet generator, as claimed in clause 2, **characterized by** the utilization of the states of water by injecting it into a mechanical bellows composed of a contraction chamber, a perfusion bag, and a micro pneumatic press, which provides a mechanical force that is harnessed for the compression of the piezoelectric generators, sending a train of electrical pulses that power a square-pulse motor (motor I), which is coupled to a permanent magnet generator for the generation of electrical energy.
